(19) **Europäisches Patentamt / European Patent Office / Office européen des brevets**

(11) **EP 4 641 215 A1**

(12) **EUROPEAN PATENT APPLICATION**
published in accordance with Art. 153(4) EPC

(43) Date of publication:
**29.10.2025 Bulletin 2025/44**

(21) Application number: **23906154.2**

(22) Date of filing: **15.11.2023**

(51) International Patent Classification (IPC):
**G01P 3/68** [(2006.01)]

(52) Cooperative Patent Classification (CPC):
**G01P 3/68**

(86) International application number:
**PCT/ES2023/070683**

(87) International publication number:
**WO 2024/133989 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 ES 202231101**

(71) Applicant: **Sistemas Aéreos Especializados S.L.**
**08205 Barcelona (ES)**

(72) Inventors:
• **BARIGÓN LAFITA, Jorge**
**08205 Barcelona (ES)**
• **MARTINEZ GARCÍA, Isaac**
**08205 Barcelona (ES)**

(74) Representative: **Balder IP Law, S.L.**
**Paseo de la Castellana 93**
**5ª planta**
**28046 Madrid (ES)**

(54) **METHOD AND SYSTEM FOR DETERMINING THE SPEED OF A VEHICLE USING A SPEED DETECTOR DEVICE**

(57) The present invention relates to a method for determining the speed of a vehicle (V, Target) (C) by means of using an optical camera (1) by means of the following steps of determining the height ($\Delta H$) of the camera (1) with respect to the ground, the inclination ($\beta$) of the line of sight (LOS) of the camera (1), and iteratively determining the intersection between the line of sight (LOS) and a horizontal line (x0x1, x1'x2, x2'x3... ) passing through the last projection (x0, x1', x2',...xn') to obtain an approximate value (x1, x2,...xn) of the position of the vehicle (V, Target), determining from a map (DTM) the vertical projection (x1', x2',...xn') over the ground of the approximate value ($x1, x_2,...x_n$), and thereby obtaining the terrain elevation ($\Delta Z$) of the vertical projection (x1', x2',...xn') with respect to the horizontal line (x0x1, x1'x2, x2'x3...), comparing the terrain elevation ($\Delta Z$) with respect to a predetermined threshold value.

Fig. 3

EP 4 641 215 A1

## Description

## TECHNICAL FIELD

The invention is comprised in the field of speed detector devices operating with visible light. Specifically, the system according to the invention is a speed detector device which allows measuring the speed of a section of motor vehicles traveling on a road or street, from an aircraft, preferably a helicopter, although other aircraft could be used. A particularity of the speed detector device is that it is a passive system as it does not require the emission of a laser beam nor an electromagnetic wave, i.e., it is based exclusively on optics. To that end, it has an optical sensor, preferably a camera with the function of recording a video with which it is possible to capture images of the vehicle on which the measurement is to be performed and the observation and analysis of which allows determining the speed of said vehicle. The system calculates the position of the vehicle once every second and determines the speed using several consecutive georeferenced positions.

## BACKGROUND

Speed detector devices operating with visible light, i.e., using a camera operating in the optical spectrum, are known. One advantage of these systems and methods is that they are passive from the radiation emission viewpoint, i.e., radiation detectable by the vehicle the speed of which is to be determined, as occurs, for example, with radars, is not emitted.

An example of a speed detector device or system for measuring speed based on an optical camera is described in document US 9070289 B2, relating to a method and system for measuring ground based vehicle speed which include an unmanned aerial vehicle (UAV) located in proximity to a road, the UAV operates under control and navigation of a UAV control unit, and the UAV also carries camera and monitoring equipment, the camera and monitoring equipment including an on-board computing system, and a camera with a wide angle lens and a camera with a telephoto lens, the cameras being mounted on a pan/tilt device. An algorithm operated by the on-board computing system is used to detect and track vehicles moving on a road. The algorithm is configured to detect and track the vehicles despite motion created by movement of the UAV. The cameras mounted on the horizontal/vertical movement device are moved under the direction of the computer vision algorithm to maintain a target vehicle of the detected moving vehicles in view, and the speed of the target vehicle is measured.

A major drawback of the methods described in the state of the art is that they are often purely theoretical and do not take into account the difficulties for the practical implementation thereof.

In particular, the application of these methods include, among others, detection of speeding violations, for which there is little time to perform measurements which must be reliable and verified in order to be valid for the application of fines.

## DESCRIPTION OF THE INVENTION

The present invention proposes a method for determining the speed of a vehicle traveling on a road or street (by means of using an optical camera based on the measurement of the position of the vehicle in two instants separated by a time interval, wherein, for each instant, the position is estimated by means of the following steps:

 a) focusing the camera on a point of the vehicle;
 b) determining the projection of the position of the camera on the ground;
 c) determining the height of the camera with respect to the ground;
 d) determining the inclination of the line of sight of the camera;
 e) determining, based on the last projection, the intersection between the line of sight of the camera and a horizontal line passing through the last projection to obtain an approximate value of the position of the vehicle;
 f) determining from a topographic map the vertical projection over the ground of the approximate value, and thereby obtaining the terrain elevation of the vertical projection with respect to the horizontal line;
 g) comparing the terrain elevation with respect to a predetermined threshold value;

   ○ if the difference is less than the threshold value, assigning the vertical projection to the vehicle;
   ○ if the difference is greater than the predetermined threshold value, returning to step e), and

once the two positions are obtained, calculating the speed of the vehicle based on the positions and the elapsed time.

In some embodiments, the topographic map includes roads and streets, and the method, after obtaining a position of the vehicle, comprises a validation step consisting of checking if the vehicle is on a road or street, taking into account a margin of tolerance, such that the estimate of the position is only used if the position falls within the margin of tolerance.

In some embodiments, the method comprises an initial step of checking the initial viewing conditions in which it is checked whether:

- the sensors used for determining the position of the camera and the inclination of the line of sight of the camera; and/or
- the camera is in a specific range of height over the terrain, the range being preferably between 50 and 1000 m, and more preferably between 150 and 700 m; and/or

- the azimuth orientation of the camera is in a specific range of angles, the range being preferably between +45° and -45 °, and more preferably between +30° and -30°; and/or
- the roll of the camera (1) is in a specific range of angles, the range being preferably between +20° and -20°, and more preferably between +15° and -15°; and/or
- accuracy check that the accuracy is RTK or DGPS; and/or
- checking that the length of the line of sight is smaller than a predetermined threshold, the threshold being preferably about 1.5 km, and more preferably 1 km.

In the present description, RTK (Real Time Kinematics) is understood to mean a technique used for navigation based on the use of phase measurements from navigators with GPS, GONASS, and/or GALILEO signals, where one or more reference stations provide real-time corrections, obtaining sub-meter accuracy.

In the present description, DGPS (Differential Global Positioning System) is understood to mean a relative positioning technique based on the correction of the information obtained by a GPS receiver by means of using data from one or more fixed GPS receivers. Accuracies below 40 cm are achieved.

The difference between both is that RTK uses algorithms to perform both ionospheric and phase corrections.

In some embodiments, several measurements of the speed v are performed and the error of the value of the speed $\sigma_v$ is determined based on the position error $\sigma_p$, and time error $\sigma_t$, preferably using the following model:

$$\sigma_v = \frac{\sqrt{2}\sigma_p + 2v\sigma_t}{\Delta t}$$

This error model is used to calculate the number of measurements and time needed for the measurements in which the calculated speed error is below a threshold by a predetermined percentage, such that the longer the measurement time, the lower the error.

In some embodiments, the camera is mounted on an aircraft, such as a helicopter, an airplane, or an unmanned aerial vehicle.

In some embodiments, the aircraft comprises means for determining its position and orientation.

In some embodiments, the means for determining its position comprise two antennas arranged at points away from the aircraft, preferably two GNSS antennas, for the purpose of improving the accuracy in determining the angle of the optical axis of the camera.

In some embodiments, the camera is movably mounted on the aircraft according to two axes of rotation, i.e., azimuth and elevation.

In some embodiments, the camera comprises automatic tracking means for tracking the point of the vehicle from which the position is estimated.

Finally, according to some embodiments, the method comprises generating a file comprising:

- the video from the camera during measurement;
- the initial and final frames;
- a text containing:

  • Road and kilometer point where the measurement has been performed;
  • Direction of travel of the vehicle;
  • Date and time;
  • Calculated effective speed of the vehicle;
  • Model and serial number of the equipment used.

The invention also relates to a system for carrying out the method according to any of the variants set forth above, comprising:

- an aircraft;
- means for determining the position and orientation of the camera;
- an optical camera mounted on the aircraft;
- a computer configured to carry out steps a) to g).

This system will also be referred to as a speed detector device in the present document.

In some embodiments of the system, the optical camera is mounted on the aircraft in a moving support with respect to the aircraft according to two axes of rotation, i.e., azimuth and elevation.

Finally, the aircraft can be a helicopter, an airplane, or an unmanned aerial vehicle.

## BRIEF DESCRIPTION OF THE FIGURES

To complete the description and in order to provide for a better understanding of the invention, a set of drawings is provided. Said drawings are an integral part of the description and illustrate embodiments of the invention, which must not be interpreted as a limitation of the scope of the invention, but simply as an example of how the invention can be carried out. The drawings comprise the following figures:

Figure 1 shows the initial situation and the first iteration of the method.

Figure 2 shows the second iteration, and the convergence method used can be seen.

Figure 3 shows the third iteration in which a value less than a predetermined threshold could already have been obtained.

Figure 4 shows the block structure of a system intended for carrying out the invention.

Figures 5 and 6 illustrate the tolerance concept used to determine if the vehicle is on a street or road.

Figure 7 shows the structure of the program used in the method and system according to the invention.

## DESCRIPTION OF PREFERRED EMBODIMENTS

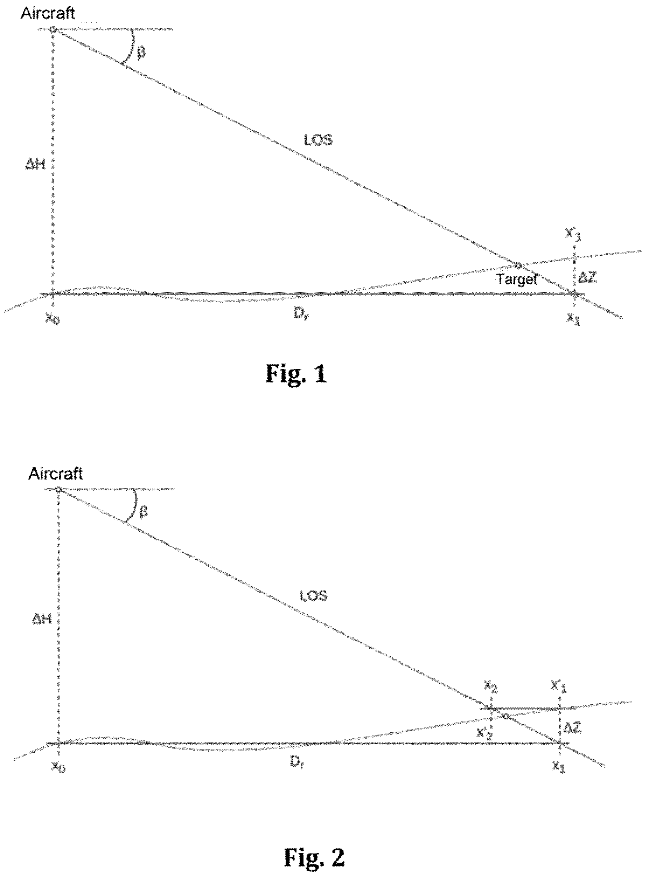

As can be seen in Figures 1 to 3, the present invention relates to a method for determining the speed of a vehicle V (referred to as target in the figures) traveling on a road or street C.

The first essential feature of the invention is that an optical camera 1 is used.

The method is based on measuring the position of the vehicle V, Target in two instants separated by a time interval $\Delta t$.

Specifically, according to the invention, the position is estimated by means of the following steps:

a) focusing the camera **1** at a point of the vehicle **V**, **Target**;

b) determining the projection $x_0$ of the position of the camera **1** on the ground;

c) determining the height $\Delta H$ of the camera **1** with respect to the ground;

d) determine the inclination $\beta$ of the line of sight **LOS** of the camera **1**;

e) determining, based on the last projection $x_0$, $x_1$, $x_2,...x_n$, the intersection between the line of sight **LOS** of the camera **1** and a horizontal line $x_0x_1$, $x_1'x_2$, $x_2'x_3...$ passing through the last projection $x_0$, $x_1'$, $x_2',...x_n$, to obtain an approximate value $x_1$, $x_2,...x_n$ of the position of the vehicle **V**, **Target**;

f) determining from a topographic map **DTM** the vertical projection $x_1'$, $x_2',...x_n'$ over the ground of the approximate value $x_1$, $x_2,...x_n$, and thereby obtaining the terrain elevation $\Delta Z$ of the vertical projection $x_1'$, $x_2',...x_n'$ with respect to the horizontal line $x_0x_1$, $x_1'x_2$, $x_2'x_3...$;

g) comparing the terrain elevation $\Delta Z$ with respect to a predetermined threshold value;

○ if the difference is less than the threshold value, assigning the vertical projection $x_1'$, $x_2',...x_n'$ to the vehicle **V**, **Target**;
○ if the difference is greater than the predetermined threshold value, returning to step **e)**, and

once the two positions are obtained, calculating the speed of the vehicle **V**, **Target** based on the positions and the elapsed time $\Delta t$.

According to a preferred aspect of the invention, maps including roads and streets are furthermore used.

In this way, after obtaining a position of the vehicle **V**, **Target,** a validation stage consisting of <u>checking whether the vehicle is on a road or street</u> is carried out, taking into account a margin of tolerance (**tolerance** in the figures), such that the estimate of the position is only used if the position falls within the margin of tolerance (**tolerance** in the figures).

## Instrument measurement training

The method for measuring speed is based on calculating the absolute position of a point in different time instants. Specifically, the position of the vehicle is estimated every second. This allows calculating the speed of the target according to the path traveled in a measured time interval.

Therefore, it is a calculation that involves a large amount of information. Not so much because of the method for obtaining the speed once the position is known, but because of the process for obtaining said position.

To that end, the information required is:

- Position of the aerial platform or aircraft (latitude, longitude, and altitude). This data is provided by **INS** (Inertial Navigation System).
- Line of sight or **LOS** of the sensor (elevation and azimuth), data that is also obtained from INS.
- Digital terrain model (**DTM**). Specifically, DTM is used. In Spain, this map can be obtained, for example, from the National Geographic Institute.

The position of the target to be calculated based on the line of sight (LOS) of the camera, its position (camera orientation and position data is provided by INS with a high refresh rate) and elevation data obtained from **DTM**, by means of an iterative process described below:

As illustrated in Figure 1, a right triangle formed by the line of sight **LOS**, the height of the aircraft $\Delta H$ over the terrain, and the horizontal that passes through the projection on the **DTM** of the position thereof $x_0$ must be considered.

Knowing the angle at which the sensor is aimed $\beta$ and $\Delta H$, the length of the mentioned horizontal line, or reduced distance **Dr**, is obtained by means of applying the sine theorem.

With said length, radiation from $x_0$ is performed to obtain the coordinates of the intersection point of the line of sight with the horizontal $x_1$. With the coordinates of $x_1$, the terrain elevation corresponding to the projection of said point over **DTM** $x_1'$ is obtained and the difference of elevations between both $\Delta Z$ is calculated.

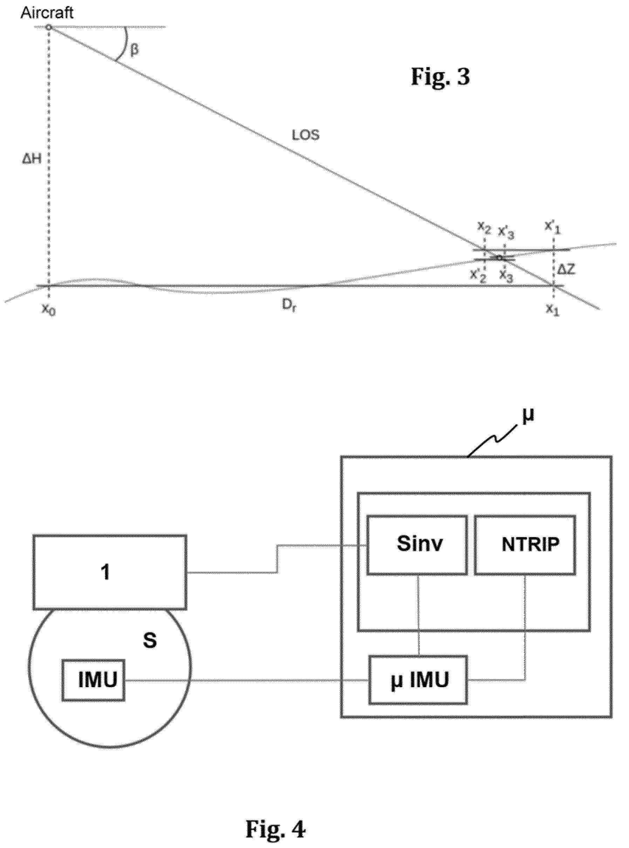

If this difference is less than a certain tolerance, it will be considered that the position of the target has been found. Otherwise, a new iteration will be performed starting from $\Delta Z$ and $x_1'$. The process will continue until a difference of elevations less than a certain tolerance, as shown in Figures 2 and 3, is obtained.

The convergence of this method is ensured by the smoothness of the terrain on which measurements are to be performed because, if the orography is very complicated, as a result of a comparison with the road maps, those erroneous measurements (for example, position estimates that are far from roads or significant elevation changes of two consecutive measurements) can be ruled out.

This will allow speed measurement to be performed indirectly by means of the following process:

1. Determining the latitude and longitude (georeferencing) of the moving vehicle in time **t1**.
2. Determining the latitude and longitude (georeferencing) of the moving vehicle in time **t2**.
3. Measuring the time elapsed between **t1** and **t2**.
4. Difference between the georeferenced positions in **t1** and **t2**.
5. Calculating speed from positions and elapsed time.

The process for determining the position of the target is performed once the operator (which may be an automaton in the case of an UAV) of the speed detector device has set a moving vehicle as target using the function of the automatic target tracking function (*autotracking*) of the camera 1. Once the target is set, the operator activates the measurement and the system will determine the positioning thereof every second for a time established according to an uncertainty and error model. This error model estimates the error of the instrument depending on the conditions and the input data for the calculation.

Components and subsystems

As shown in Figure 4, the system according to the invention includes the following elements:

- A computer μ containing the relevant software to perform measurement, such as the program with the calculation process or **DTM**; which will store the data gathered during measurement and will be installed on board the aircraft.

- A video camera **1** gyrostabilised by means of a support **S** having a control panel, and preferably installed outside the aircraft, which furthermore has an *autotracking* function, which is understood as the capacity to detect and track a target designated by the operator.

- An inertial navigation system aided by a dual GNSS reception system (with RTK accuracy), which provides centimeter-accurate information on the position and spatial orientation of the camera. This system works as a result of an **IMU** (Inertial Measurement Unit) that is found inside the gyrostabilised camera and two GPS antennas mounted on the aircraft.

- The display system formed by two screens: one screen intended for the operation of the system by means of the user interface (in this case, the system is controlled by means of using a touch screen), and one screen intended for viewing and handling the gyrostabilised camera 1.

- A **Sinv** software with instructions for carrying out the method according to the invention incorporated in the computer μ.

- The **NTRIP** software is responsible for sending the GPS position to the server (by means of an Internet connection). The server sends the differential corrections (those used to increase the accuracy of GNSS positioning) based on this position, and they are sent to the INS which uses them to thereby obtain greater accuracy (RTK or DGPS, depending on the conditions, among others).

Road screening

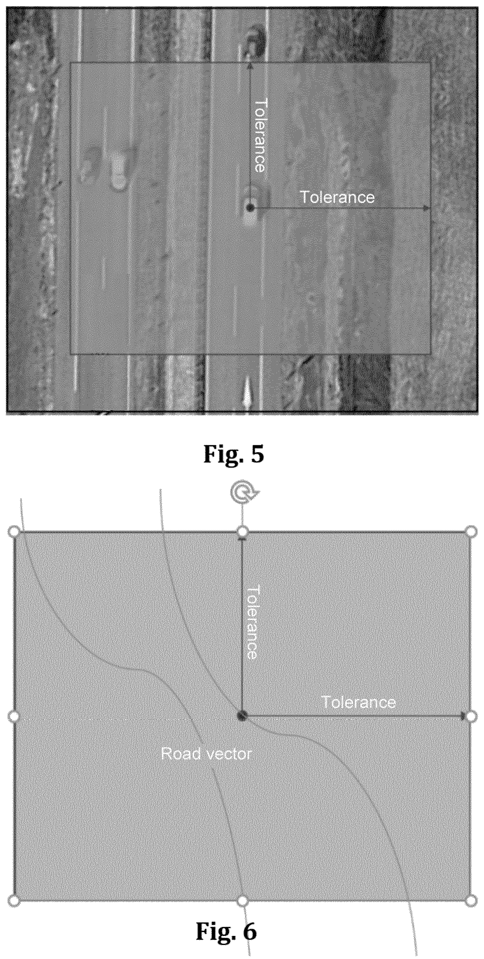

This screening, which should be interpreted with the help of Figures 5 and 6, is applied to each of the measurements performed. If the mean passes the initial screening but does not pass road screening, measurement is prevented.

This is a preferred feature of the present invention intended for preventing measurements on new roads that are not contemplated in the terrain elevation model **DTM**. The heights between two consecutive position measurements are also checked and discarded if the height difference between them is greater than 1 m.

This screening contains the following steps:

- Defining a tolerance (Tolerance in Figure 5) to establish a box that encompasses the previously projected point.

- Obtaining all road sections included within the area of influence by means of an intersection operation between the road mapping and the calculated box.

- With the roads resulting from the intersection, it is determined whether the distance between them and the target point is less than a maximum value. This value is calculated from the information on the number of lanes on that section. If the value is higher, the measurement is prevented and the operator US is eventually notified.

Error model and measurement time

Another advantageous feature, although optional, is the error model used to automatically calculate the measurement time required to ensure that the measurement error is below a specific threshold.

Once the operator presses a measurement recording button, the system begins to store the speed measurements every second. This is performed for a period of time that depends on the estimated maximum speed error. To that end, the same position error model is used, propagating the error to the speed. This is represented as follows:

$$\sigma v = (\sqrt{2}\sigma P + 2v\sigma t)/\Delta t$$

- Considering a constant position error (considering the maximum) and a time error that is also constant, for each additional position measurement, the time increment of the measurement increases, which decreases the speed error.

Once the speed error is less than a certain threshold (for example, 3.3%), the system takes one more measurement and ends the speed recording.

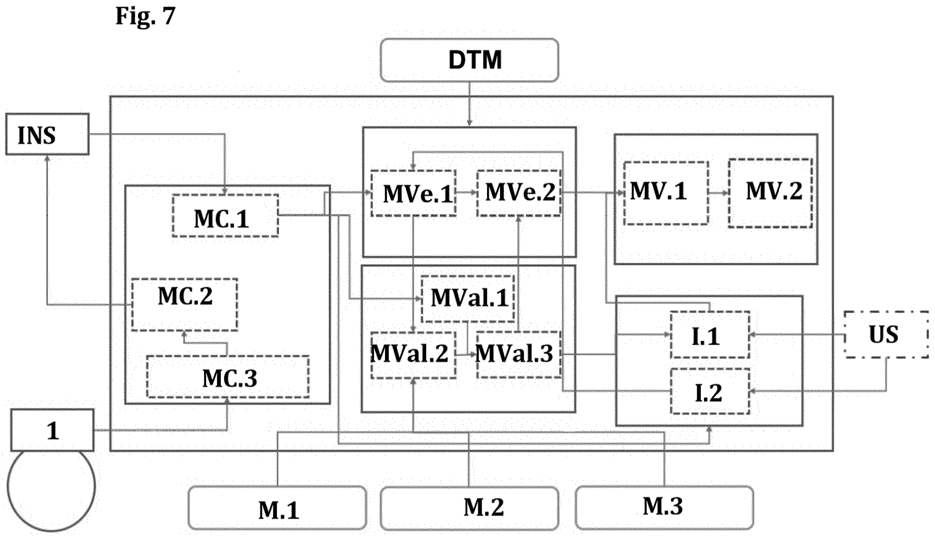

Figure 7 summarizes the relationship between the different concepts used by the inventive system and the data flow:

INS: *Inertial Navigation System*

DTM (Digital Terrain Model): Elevation and geoid maps. In summary, DTM and geoid are used to calculate the position of the target, and the street map is used to compare with same based on the position of the target, in order to know if it is within the road. Optionally, a municipality map is used to determine the municipality in which the offense was committed.

Connection module (intended for determining camera position and orientation data)

This module is responsible for the following functions:

- Receiving and reading the position, orientation, and time information provided by the INS.
- Receiving and reading the relative position information of the camera.
- Calculating the relative position of the camera and GPS antennas.
- Sending corrections of the relative position of the camera and antennas to the INS.
- Sending the position data of the camera/aircraft to the user interface for display on the map.
- Sending the position, orientation, and time data provided by the INS to the speed calculation module.

    MC.1: Position and orientation data
    MC.2: Relative orientation of the camera and GPS antennas
    MC.3: Relative orientation of the camera

Speed module (intended for calculating vehicle speed)

This module is responsible for calculating the position of the vehicle using, to that end, position and orientation data from the connection module. This position calculation is performed with the last measurements of the latter (i.e., the position of the target is estimated every second). If the calculation algorithm does not converge, the previous measurement of the latter is used, and so on and so forth. Elevation maps and geoid undulation maps are used to calculate the position.

    MVe.1: Vehicle position
    MVe.2: Vehicle speed

Validation module (intended for validating estimated positions)

This module is responsible for validating the initial conditions of the measurement, i.e., it ensures that the initial conditions are within a predetermined range. It also ensures that the estimated position of the vehicle is within a road. To that end, road, road kilometer point, and municipality maps are used.

    MVal.1: Initial condition check
    MVal.2: Vehicle position validation
    MVal.3: Validated position

User interface

    I.1: Measurements authorization
    I.2: Command to start speed calculation

US: Operator

Street and road maps:

    M.1: Road maps
    M.2: Kilometer point maps
    M.3: Municipality maps

In this text, the term "comprises" and its derivations (such as "comprises", etc.) should not be understood in an excluding sense, that is, these terms should not be interpreted as excluding the possibility that what is described and defined may include other elements.

Obviously, the invention is not limited to the specific embodiments described herein, but also encompasses any variations that may be, by any person skilled in the art, considered to be within the general scope of the invention as defined in the claims.

**Claims**

1. A method for determining the speed of a vehicle (V, Target) traveling on a road or street (C) by means of using an optical camera (1) based on the measurement of the position of the vehicle (V, Target) in two instants separated by a time interval ($\Delta t$), wherein, **for each instant**, the position is estimated by means of the following steps:

   a) focusing the camera (1) at a point of the vehicle (V, Target);
   b) determining the projection ($x_0$) of the position of the camera (1) on the ground;
   c) determining the height ($\Delta H$) of the camera (1) with respect to the ground;
   d) determining the inclination ($\beta$) of the line of sight (LOS) of the camera (1);
   e) determining, based on the last projection ($x_0$, $x_1$, $x_2$,...$x_n$), the intersection between the line of sight (LOS) of the camera (1) and a horizontal line ($x_0 x_1$, $x_1 \cdot x_2$, $x_2 \cdot x_3$...) passing through the last projection ($x_0$, $x_1'$, $x_2'$,...$x_n'$) to obtain an approximate value ($x_1$, $x_2$, $x_n$) of the position of the vehicle (V, Target);
   f) determining from a topographic map (DTM) the vertical projection ($x_1'$, $x_2'$,...$x_n'$) over the ground of the approximate value ($x_1$, $x_2$,...$x_n$), and thereby obtaining the terrain elevation ($\Delta Z$) of the vertical projection ($x_1'$, $x_2'$,...$x_n'$) with respect to the horizontal line ($x_0 x_1$, $x_1 \cdot x_2$, $x_2 \cdot x_3$...);
   g) comparing the terrain elevation ($\Delta Z$) with respect to a predetermined threshold value;

   ○ if the difference is less than the threshold value, assigning the vertical projection ($x_1'$, $x_2'$,... $x_n'$) to the vehicle (V, White);
   ○ if the difference is greater than the predetermined threshold value, returning to step e), and

   once the two positions are obtained, calculating the speed of the vehicle (V, Target) based on the positions and the elapsed time ($\Delta t$).

2. The method according to claim 1, wherein at least one road map is additionally used, such that after obtaining a position of the vehicle (V, Target), a validation step consisting of checking if the vehicle is on a road or street is performed, taking into account a margin of tolerance (tolerance), such that the estimate of the position is only used if the position falls within the margin of tolerance (tolerance).

3. The method according to any of the preceding claims, comprising an initial step of checking the initial viewing conditions in which it is checked whether:

   - the sensors used for determining the position of the camera (1) and the inclination ($\beta$) of the line of sight (LOS) of the camera (1); and/or
   - the camera (1) is in a specific range of height over the terrain, the range being preferably between 50 and 1000 m, and more preferably between 150 and 700 m; and/or
   - the azimuth orientation of the camera (1) is in a specific range of angles, the range being preferably between +30° and -30° (+45° and -45 °); and/or
   - the roll of the camera (1) is in a specific range of angles, the range being preferably between +15° and -15° (+20° and -20°); and/or
   - accuracy check that the accuracy is RTK or DGPS; and/or
   - checking that the length of the line of sight is smaller than a predetermined threshold, the threshold being preferably about 1.5 km, and more preferably 1 km.

4. The method according to any of the preceding claims, wherein several measurements of the speed **v** are performed and the error of the value of the speed $\sigma_v$ is determined based on the position error $\sigma_p$ and time error $\sigma_t$, preferably using the following model:

$$\sigma_v = \frac{\sqrt{2}\sigma_p + 2v\sigma_t}{\Delta t}$$

5. The method according to any of the preceding claims, wherein the camera is mounted on an aircraft, such as a helicopter, an airplane, or an unmanned aerial vehicle.

6. The method according to claim 5, wherein the aircraft (Aircraft) comprises means for determining its position and orientation (INS).

7. The method according to claim 6, wherein the means for determining its position (INS) comprise two antennas arranged at points away from the aircraft (Aircraft), preferably two GNSS antennas.

8. The method according to any of claims 5 to 7, wherein the camera (1) is movably mounted on the aircraft (Aircraft) according to two axes of rotation (azimuth and elevation).

9. The method according to any of the preceding claims, wherein the camera comprises automatic tracking means for tracking the point of the vehicle (V, Target) from which the position is estimated.

**10.** The method according to any of the preceding claims, which comprises generating a file comprising:

- the video from the camera during measurement;
- the initial and final frames;
- a text containing:

• Road and kilometer point where the measurement has been performed;
• Direction of travel of the vehicle;
• Date and time;
• Calculated effective speed of the vehicle;
• Model and serial number of the equipment used.

**11.** A system for carrying out the method according to any of the preceding claims, comprising:

- an aircraft (Aircraft);
- means for determining the position and orientation (INS) of the camera (1);
- an optical camera (1) mounted on the aircraft (Aircraft);
- a computer configured to carry out steps a) to g).

**12.** The system according to claim 11, wherein the optical camera (1) is mounted on the aircraft (Aircraft) in a moving support with respect to the aircraft (Aircraft) according to two axes of rotation (azimuth and elevation).

**13.** The system according to claim 11 or 12, wherein the aircraft (Aircraft) is a helicopter, an airplane, or an unmanned aerial vehicle.

**Fig. 1**

**Fig. 2**

**Fig. 3**

**Fig. 4**

**Fig. 5**

**Fig. 6**

Fig. 7

# INTERNATIONAL SEARCH REPORT

| | International application No. |
|---|---|
| | PCT/ES2023/070683 |

**A. CLASSIFICATION OF SUBJECT MATTER**

*G01P3/68* (2006.01)

According to International Patent Classification (IPC) or to both national classification and IPC

**B. FIELDS SEARCHED**

Minimum documentation searched (classification system followed by classification symbols)
G01P

Documentation searched other than minimum documentation to the extent that such documents are included in the fields searched

Electronic data base consulted during the international search (name of data base and, where practicable, search terms used)

EPODOC, INVENES, WPI, NPL, XPESP, XPAIP, XPI3E, INSPEC.

**C. DOCUMENTS CONSIDERED TO BE RELEVANT**

| Category* | Citation of document, with indication, where appropriate, of the relevant passages | Relevant to claim No. |
|---|---|---|
| A | KR 101594128B B1 (SAMSUNG INORMATION & COMM ET AL.) 15/02/2016, the whole document. | 1-13 |
| A | EP 2083341 A2 (HONEYWELL INT INC) 29/07/2009, the whole document. | 1-13 |
| A | CN 105184776 A (CN ACAD SURVEYING & MAPPING) 23/12/2015, the whole document. | 1-13 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 15/02/2024 | **(20/02/2024)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | J. Botella Maldonado Telephone No. 913495382 |

Form PCT/ISA/210 (second sheet) (July 2022)

## INTERNATIONAL SEARCH REPORT

Information on patent family members

International application No.

PCT/ES2023/070683

| Patent document cited in the search report | Publication date | Patent family member(s) | Publication date |
|---|---|---|---|
| KR101594128B B1 | 15.02.2016 | WO2017034375 A1 | 02.03.2017 |
| EP2083341 A2 | 29.07.2009 | JP2009173263 A | 06.08.2009 |
| | | US2009187299 A1 | 23.07.2009 |
| | | US7970507 B2 | 28.06.2011 |
| CN105184776 A | 23.12.2015 | CN105184776B B | 28.09.2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9070289 B2